**Europäisches Patentamt**

**European Patent Office**

**Office européen des brevets**

(11) Publication number: **0 148 533**
**B1**

(12) **EUROPEAN PATENT SPECIFICATION**

(45) Date of publication of patent specification: **18.05.88**

(21) Application number: **84201903.6**

(22) Date of filing: **18.12.84**

(51) Int. Cl.⁴: **F 17 C 5/02, B 60 K 15/08**

(54) **LPG filling valve for a vehicle.**

(30) Priority: **05.01.84 NL 8400039**

(43) Date of publication of application:
**17.07.85 Bulletin 85/29**

(45) Publication of the grant of the patent:
**18.05.88 Bulletin 88/20**

(84) Designated Contracting States:
**AT BE CH DE FR GB IT LI LU NL SE**

(56) References cited:
**FR-A-2 367 982**
**FR-A-2 492 052**
**NL-A-7 902 309**

(73) Proprietor: **FIEGE LPG SERVICE B.V.**
**Burg. v. Amersfoordtlaan 1a**
**NL-1171 DL Badhoevedorp (NL)**

(72) Inventor: **Fiege, Johannes Hermanus Hendrikus**
**Burg. v. Amersfoordtlaan 1a**
**NL-1171 DL Badhoevedorp (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to filling valve on a vehicle for filling a fuel tank with fuel at excess pressure, said valve comprising a valve housing with a non return valve, a fitting part situated upstream of the non return valve seen in the direction of flow during filling, said fitting part having coupling elements such as screw thread for the connection with a supply line, said valve housing downstream of the non return valve being provided with connecting means for connecting the valve housing with the fuel tank and means for attaching the valve housing to the vehicle body.

A filling valve of this type is known from, for instance NL—A—7902309.

Said known filling valve has a valve housing with a non return valve and with a fitting part situated upstream of the valve and with coupling elements for a filling line upstream the valve as well as elements located downstream the valve for connecting a line to the fuel tank. The valve housing of said known valve is movably mounted inside a casing, so that it can be shifted inwardly or outwardly to expose the fitting part or to move said valve housing with fitting part inwardly. Purpose of said movability is to achieve that valve housing and closure cap protrude as less as possible beyond the body of the vehicle to avoid the disadvantage of previously known valves, which extend far beyond the outer surface of body panels of the vehicle and accordingly disturb the line of the vehicle.

The construction of said known valve is very complicated. In the withdrawn position the valve housing is closed by a cap screwed upon the fitting part and held against the body panel by the action of a spring. This, however, requires a shape of the closure cap such that it easily can be gripped by the hand to be pulled outwardly. As alternative said publication NL—A—7902309 two caps are used, one for closing the valve housing and one for closing the opening in the body panel in case, after the filling operation, the valve housing is moved inwardly. This, however, is a further complication.

Purpose of the invention is to find a simple solution for the problem of obtaining a filling valve on a vehicle, which does not disturb the outer surface of the vehicle body.

According to the invention this object is achieved in that the said means for attaching the valve housing to the vehicle body are formed by a flat flange which forms an integral part of and protrudes radially from the valve housing and that said fitting part extends downstream from said flat flange within said valve housing.

By this simple measures one obtains a valve housing the radially outwardly protruding flange of which forms the outermost part of the valve housing and the part to be used for fastening the housing, while all other parts of the valve housing are located further downstream, which after assembly means further inwards.

The valve housing according to the invention is composed of only a few parts to know the valve housing with integral radially protruding flange, the fitting part in the form of inner screw thread, inner screw thread for fastening the non return valve and a coupling for the line towards the fuel tank, all in one piece. Further elements are the closure cap and the non return valve with a spring and valve seat.

When placed in an opening of a part of the vehicle, such as a side panel of a body, the flange can now be positioned in such a way that the maximum part projecting outwards is determined by the thickness of the flange.

The term "flange" is understood to mean an ordinary square or rectangular flange with holes for fixing bolts, but it can also be a square or annular flange which is secured against turning in the body opening by a boss or the like and is attached by a ring or clamping elements fitted against the rear wall of the body plate.

Using this last-mentioned element produces a practically flush filling valve assembly, i.e. it hardly projects at all beyond the surface of the body.

The number of positioning possibilities is thereby greatly extended, and the purchase of a liquid gas or LPG installation is made less unattractive, because the now stipulated external placing of the filling valve does not mar the line of the body, and the filling valve according to the invention also permits positionings where the filling valve cannot be seen at all, for example behind a hingeably attached number plate.

If it is fastened with a clamping ring lying against the inside of the body panel, one cannot even see any bolt heads. If, however, bolts are used for fastening of the flange, they can, of course, have countersunk head.

The protection of the fitting against dust can consist of a simple cap, which is clamped in or screwed into the fitting opening.

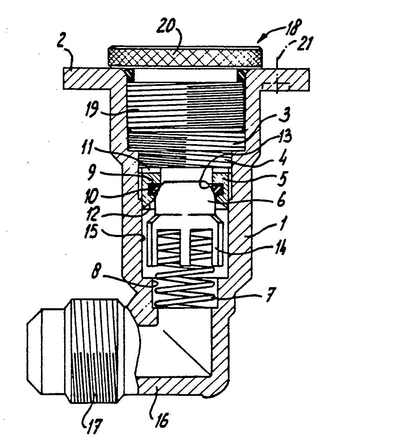

The invention will now be explained in greater detail with reference to the drawing, which shows an embodiment of the invention in cross section.

The drawing shows a housing 1 with a flange 2, a screw-thread part 3 which follows the flange and forms the fitting to which is connected the filling line of the filling station, for example an LPG filling line, or which has screwed into it an adapter if the filling line of the filling station does not fit.

Instead of the screw-thread fitting 3, one can also have other connection elements, such as a bayonet connection.

The screw-thread fitting 3 is downstream of the flange 2.

Following the fitting part is a second screw-thread part 4, into which is screwed the valve housing 5 to take the valve 6, which is held in the closed position by a helical spring 7, which rests in the narrow part 8. The valve housing has a groove 9 to take an O-ring 10, and a groove 11 for tightening with a screwdriver. The O-ring 10 works in conjunction with the convex top face 13 of the valve, which with legs 14 is guided on the wall 15 of the valve housing and can find a stop on the bottom face 12 of the valve seat.

The housing has a square flanged part 16 with external screw thread 17 for connection of the line or hose going to the tank. This part 16 need not, of course, stand at right angles to the main part of the housing 1, but can also be in line with it.

Shown above the flange 2 is a cap 18 with a screw-thread part 19 which fits into the fitting 3, and a rim 20 which is shaped in such a way that the cap 18 is easily screwed on and off.

The flange 2 can be provided with four bolt holes, one of which is schematically indicated by the centre line 21, said bolt holes being positioned in the known manner in the corners of a square flange.

The housing part 22 can, however, also be positioned in a hole in the body wall in such a way that it cannot turn, for example with a projecting boss, and on the outside 22 of the housing 1 a ring can then be clamped, for example with a screw thread.

Bolts and bolt holes are not needed then. The flange can be smaller and, for example, circular. The flange can also be thinner. This design is suitable for positioning where the rear side of the body panel or vehicle part is readily accessible, for example the rear panel of the boot of a vehicle.

## Claim

Filling valve on a vehicle for filling a fuel tank with fuel at excess pressure, said valve comprising a valve housing (1) with a non return valve (6), a fitting part (3) situated upstream of the non return valve (6) seen in the direction of flow during filling, said fitting part having coupling elements such as screw thread for the connection with a supply line, said valve housing downstream of the non return valve (6) being provided with connecting means (17) for connecting the valve housing (1) with the fuel tank and means for attaching the valve housing to the vehicle body, characterized in, that the said means for attaching the valve housing (1) to the vehicle body are formed by a flat flange (2) which forms an integral part of and protrudes radially from the valve housing (1) and that said fitting part (3) extends downstream from said flat flange (2) within said valve housing (1).

## Patentanspruch

Füllventil an einem Fahrzeug zum Füllen eines Kraftstoffbehälters mit Kraftstoff bei Überdruck, wobei das Ventil umfaßt: ein Ventilgehäuse (1) mit einem Rückschlagventil (6), ein Anschlußteil (3), das aufstrom vom Rückschlagventil — gesehen in Strömungsrichtung beim Füllen — angeordnet ist und Verbindungselemente wie etwa Gewinde zum Anschluß an eine Förderleitung hat, wobei das Ventilgehäuse abstrom vom Rückschlagventil (6) einen Anschluß (17) zum Verbinden des Ventilgehäuses (1) mit dem Kraftstoffbehälter und Mittel zum Befestigen des Ventilgehäuses an der Fahrzeugkarosserie aufweist, dadurch gekennzeichnet, daß die Mittel zum Befestigen des Ventilgehäuses (1) an der Fahrzeugkarosserie von einem flachen Flansch (2) gebildet sind, der einen mit dem Ventilgehäuse (1) einstückigen Teil bildet und von diesem in Radialrichtung vorspringt, und daß das Anschlußteil (3) sich abstrom von dem flachen Flansch (2) in das Ventilgehäuse (1) erstreckt.

## Revendication

Clapet de remplissage sur un véhicule pour remplir un réservoir de carburant avec un carburant en surpression, ledit clapet comportant une chambre (1) de soupape avec une soupape anti-retour (6), une pièce de raccordement (3) située en amont de la soupape anti-retour (6) vue dans le sens de l'écoulement pendant le remplissage, ladite pièce de raccordement ayant des éléments d'accouplement, tels que des filetages, pour le raccordement avec un tuyau d'alimentation, ladite chambre de soupape en aval de la soupape anti-retour (6) étant pourvue d'un moyen de liaison (17) pour relier la chambre (1) de soupape au réservoir de carburant et d'un moyen pour fixer la chambre de soupape à la carrosserie du véhicule, caractérisé en ce que ledit moyen pour fixer la chambre (1) de soupape à la carrosserie du véhicule est formé par un rebord plat (2) qui fait corps avec la chambre (1) de soupape et fait saillie radialement depuis celle-ci, et en ce que ladite pièce de raccordement (3) s'étend en aval de ce rebord plat (2) à l'intérieur de la chambre (1) de soupape.